# FASCICULE DE BREVET EUROPEEN

(11) **EP 0 751 529 B1**
(45) Date de publication et mention de la délivrance du brevet: **07.01.1999**
(21) Numéro de dépôt: 96401264.5
(22) Date de dépôt: 11.06.1996
(51) Int. Cl.: G21C 3/34

(54) **Procédé et dispositif de soudage de plaquettes entrecroisées d'une grille-entretoise d'un assemblage de combustible par l'extérieur de la grille**
Verfahren und Vorrichtung zum Verschweissen von ausserhalb von sich kreuzendem Stegen eines Abstandhaltergitters für Kernbrennstabbündel
Method and apparatus for welding criss-crossed strips of a fuel assembly spacer grid from the exterior of said grid

(30) Priorité: 29.06.1995 FR 9507861
(43) Date de publication de la demande: 02.01.1997
(73) Titulaire: FRANCO-BELGE DE FABRICATION DE COMBUSTIBLE FBFC, 92400 Courbevoie (FR)
(72) Inventeur: Duthoo, Dominique, 26100 Romans Sur Isère (FR)
(74) Mandataire: Bouget, Lucien

(56) Documents cités:
- EP-A- 0 088 021
- EP-A- 0 104 119
- EP-A- 0 305 944
- EP-A- 0 456 577
- PATENT ABSTRACTS OF JAPAN vol. 010, no. 083 (M-466) 02 Avril 1986 & JP-A-60 223 693 (NIHON NIYUKURIA FUYUERU KK) 08 Novembre 1985

## Description

L'invention concerne un procédé et un dispositif de soudage de plaquettes métalliques entrecroisées d'une grille-entretoise d'un assemblage combustible pour un réacteur nucléaire, par l'extérieur de la grille.

Les assemblages de combustible pour réacteur nucléaire et en particulier pour réacteurs nucléaires refroidis à l'eau sous pression comportent un faisceau d'éléments de combustible de forme cylindrique et de grande longueur appelés crayons qui sont maintenus à l'intérieur d'une ossature de l'assemblage de combustible dans une disposition où les crayons sont tous parallèles entre eux.

L'ossature de l'assemblage de combustible comporte des grilles-entretoises comprenant des cellules disposées suivant un réseau régulier destiné à assurer le maintien transversal des crayons de l'assemblage combustible. Des tubes-guides dont la longueur est supérieure à la longueur des crayons de combustible sont engagés dans certaines cellules des grilles-entretoises. Des embouts d'extrémité fixés sur les extrémités des tubes-guides assurent la rigidification de l'ossature et la retenue des crayons de combustible.

Les grilles-entretoises sont réparties suivant la longueur des tubes-guides, à intervalles réguliers.

Les grille-entretoises comportent des cellules de forme prismatique qui sont le plus souvent parallélépipédiques et à section carrée et qui sont destinées à recevoir soit un crayon de combustible, soit un tube-guide de l'ossature.

Les grilles-entretoises sont généralement constituées par des plaquettes métalliques entrecroisées disposées suivant deux directions à 90° et délimitant des cellules de forme parallélépipédique à section carrée destinée à recevoir les crayons de combustible et les tubes-guides de l'assemblage. Chacune des plaquettes du réseau à mailles carrées constituant la grille-entretoise recoupe l'ensemble des plaquettes disposées dans une direction à 90° par rapport à la plaquette. Chacune des intersections de deux plaquettes constitue un croisillon ayant quatre angles dièdres à 90° et une arête de jonction commune à quatre cellules de la grille. Les plaquettes sont assemblées par emboîtement puis par soudage suivant les arêtes de jonction communes à quatre cellules de la grille.

Généralement, pour assurer l'assemblage des plaquettes constituant un croisillon suivant une arête, on engage les plaquettes l'une sur l'autre par l'intermédiaire d'une fente occupant la moitié de la largeur de la plaquette.

On réalise dans un premier temps l'assemblage de la grille par engagement des plaquettes les unes avec les autres suivant le réseau à mailles carrées de la grille et par assemblage de la ceinture périphérique de la grille avec les extrémités des plaquettes. On effectue ensuite le soudage des plaquettes, l'une sur l'autre, au niveau des points de croisement des plaquettes à l'extrémité de chacune de leurs arêtes de jonction puis de la ceinture périphérique assurant la fermeture des cellules périphériques de la grille. Les cellules des grilles-entretoises ont une dimension telle que les crayons de combustible sont engagés avec un jeu assez important à l'intérieur des cellules. Pour assurer le maintien des crayons de combustible à l'intérieur des cellules de la grille, on utilise des moyens de maintien venant en saillie à l'intérieur de chacune des cellules. Ces moyens de maintien peuvent être constitués par des bossettes obtenues par découpage et repoussage du métal des plaquettes vers l'intérieur des cellules et par des ressorts qui peuvent être rapportés sur les parois des cellules constituées par des parties des plaquettes ou formés par découpage et repoussage du métal des plaquettes.

Les tubes-guides sont introduits pratiquement sans jeu à l'intérieur des cellules des grilles-entretoises et peuvent être fixés par soudage sur certaines grilles de l'assemblage de combustible.

Dans une grille-entretoise pour un assemblage de combustible de type classique, chacune des cellules peut comporter par exemple deux jeux de deux bossettes sur deux parois adjacentes et deux ressorts sur deux autres parois adjacentes situées en vis-à-vis des bossettes. Dans les cellules d'une telle grille-entretoise, le crayon de combustible est repoussé par chacun des ressorts sur les deux bossettes situées en vis-à-vis du ressort.

Au moment du montage et du soudage de la grille-entretoise, les plaquettes qui sont assemblées les unes avec les autres comportent les bossettes et les ressorts destinés à venir en saillie à l'intérieur de chacune des cellules de la grille. Les plaquettes comportent de plus d'autres parties découpées et repoussées, telles que des languettes ou des ergots améliorant la rigidité et la tenue de la grille assemblée.

Il peut être nécessaire et avantageux de souder entre elles les plaquettes de la grille-entretoise au niveau de chacune de leurs arêtes constituant l'arête d'un croisillon formé par deux parties de plaquettes assemblées entre elles.

L'un des problèmes rencontrés lors du soudage des grilles-entretoises des assemblages de combustible est relatif à l'échauffement des plaquettes dû au soudage qui peut être à l'origine de l'apparition de contraintes et de déformations de la grille.

On a proposé divers procédés de soudage successif des arêtes d'une grille-entretoise permettant de limiter le plus possible les contraintes et les déformations subies par la grille du fait de l'échauffement dû au soudage.

Par exemple, on propose, dans la demande de brevet EP-A-0 751 528 déposée le même jour que la présente demande, une grille-entretoise pour assemblage de combustible dont les soudures des croisillons sont réalisées, par l'intérieur de la grille, successivement, suivant deux plans bissecteurs à 90° des dièdres constituant un croisillon. Les croisillons successifs disposés suivant la longueur d'une plaquette de la grille comportent des soudures successives, suivant une partie de la longueur de l'arête du croisillon au voisinage d'une des faces de la grille, dirigées suivant un premier plan bissecteur de deux dièdres du croisillon puis, pour le croisillon suivant, suivant un second plan bissecteur de deux dièdres du second croisillon à 90° par rapport au premier.

Les soudures au voisinage de la seconde face de la grille sur chacune des arêtes des cellules sont situées dans des plans bissecteurs à 90° par rapport aux plans bissecteurs dans lesquels sont réalisées les soudures des arêtes au voisinage de la première face de la grille.

Un tel procédé permet de limiter de manière importante les contraintes et déformations subies par la grille lors du soudage du fait de la répartition des lignes de soudure autour d'une même cellule de la grille et à chacune des extrémités de la cellule disposées au voisinage d'une face de la grille.

D'autres procédés et dispositifs par soudage laser des grilles-entretoises sont connus par les documents EP-A-0 088 021 et JP-A-60 223 693.

En outre, le procédé de soudage par faisceau laser est particulièrement bien adapté au cas du soudage des plaquettes dont l'épaisseur est relativement faible et au soudage suivant les arêtes des cellules dont la section est de taille réduite (par exemple de l'ordre de (1 x 1) cm²).

Un problème lié à la fabrication des grilles-entretoises des assemblages de combustible est relatif à la durée d'exécution du soudage du fait du très grand nombre de soudures à réaliser.

Dans le cas du procédé mentionné ci-dessus, il est nécessaire d'effectuer quatre soudures suivant chacune des arêtes de chacune des cellules, du fait que les soudures sont effectuées successivement dans chacun des plans bissecteurs des quatre dièdres de chacun des croisillons.

De ce fait, dans le cas d'une grille comportant 16 x 16 croisillons, le nombre de soudures à réaliser pour l'ensemble des croisillons de la grille est 4 x 16 x 16 = 1024 soudures.

Il est donc nécessaire de disposer d'un procédé de soudage qui permette de réaliser les soudures suivant une séquence permettant de limiter l'apparition des contraintes et déformations dans la grille, avec une durée d'exécution de l'ensemble des soudures de la grille qui soit la plus courte possible.

Le but de l'invention est donc de proposer un procédé de soudage de plaquettes métalliques entrecroisées d'une grille-entretoise d'un assemblage de combustible pour un réacteur nucléaire délimitant des cellules de forme parallélépipédique à section carrée juxtaposées constituant un réseau dans lequel quatre cellules voisines ont une arête commune suivant laquelle on réalise l'assemblage et le soudage de deux plaquettes constituant un croisillon, les arêtes de la grille étant toutes parallèles entre elles et les cellules ayant des extrémités ouvertes suivant deux faces parallèles opposées de la grille-entretoise, ce procédé permettant de réaliser des séquences de soudage susceptibles de limiter l'échauffement, les contraintes et la déformation subies par la grille au cours du soudage et de réaliser l'ensemble des soudures d'une grille-entretoise en un temps réduit, c'est-à-dire avec un coût limité.

Dans ce but :
- on place et on maintient pendant le soudage la grille-entretoise dans une disposition telle que ses deux faces opposées soient entièrement accessibles,
- on effectue simultanément, à l'aide de deux ensembles d'au moins deux dispositifs de soudage au laser disposés de part et d'autre des faces opposées de la grille-entretoise de manière à diriger chacun un faisceau laser de soudage sur une arête de la grille, par l'extérieur des cellules, le soudage d'au moins quatre tronçons d'arête de la grille, et
- on réalise, après une opération de soudage d'au moins quatre tronçons d'arête de la grille, un déplacement relatif entre la grille-entretoise et les dispositifs de soudage, de manière à diriger les faisceaux laser de soudage des dispositifs de soudage vers au moins quatre nouveaux tronçons d'arête de la grille.

L'invention est également relative à un dispositif de soudage des plaquettes d'une grille-entretoise selon la revendication 6.

Afin de bien faire comprendre l'invention, on va maintenant décrire, à titre d'exemple non limitatif, en se référant aux figures jointes en annexe, deux modes de réalisation d'un procédé de soudage suivant l'invention et un dispositif de soudage permettant de mettre en oeuvre le procédé.

La figure 1 est une vue de dessus d'une partie d'une grille-entretoise d'un assemblage de combustible pour un réacteur nucléaire à eau sous pression.

La figure 2 est une vue en coupe verticale suivant 2-2 de la figure 1.

La figure 3 est une vue en élévation verticale et en coupe d'une installation de soudage permettant de mettre en oeuvre le procédé suivant l'invention.

La figure 4 est une vue en coupe suivant 4 de la figure 3.

La figure 5 est une vue en perspective d'une partie de la grille pendant une opération de soudage des plaquettes de la grille par un procédé selon l'invention.

La figure 6 est une vue de dessus d'une partie d'une grille-entretoise montrant des séquences de soudage d'arêtes de la grille par le procédé suivant l'invention.

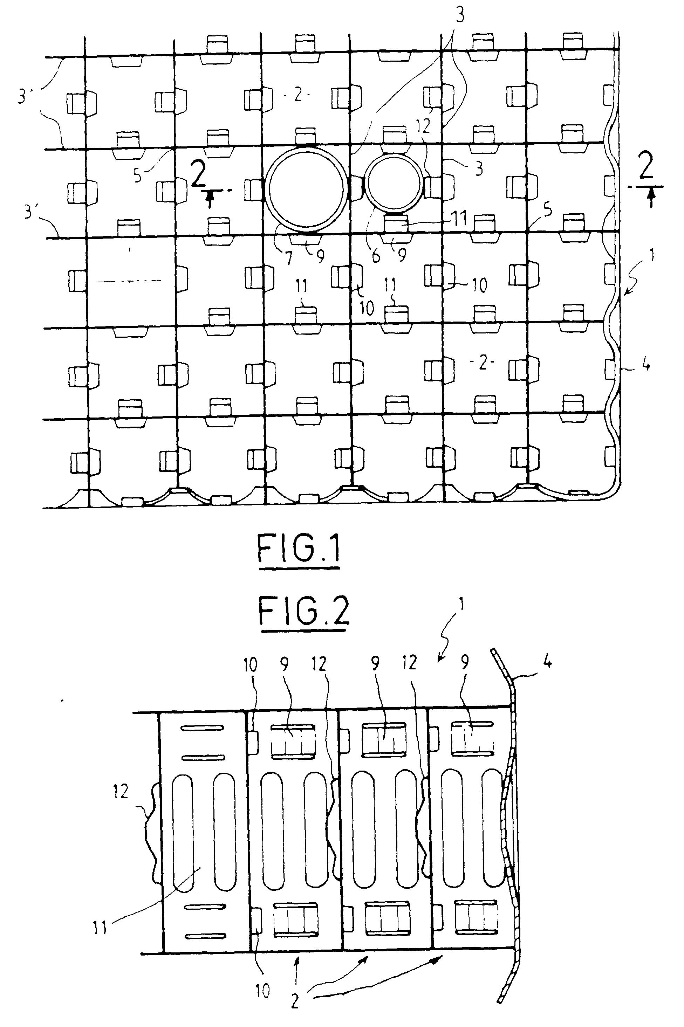

Sur les figures 1 et 2, on voit une partie d'une grille-entretoise d'un assemblage de combustible pour un réacteur nucléaire à eau sous pression désigné de manière générale par le repère 1.

La grille 1 comporte un ensemble de cellules 2 de forme parallélépipédique à section carrée disposées suivant le réseau à maille carrée représenté sur la figure 1.

La grille est constituée par des plaquettes métalliques entrecroisées, un premier ensemble de plaquettes 3 toutes parallèles entre elles ayant une première direction et un second ensemble de plaquettes 3' toutes parallèles entre elles ayant une seconde direction à 90° par rapport à la direction des plaquettes 3. Chacune des cellules 2 de la grille est délimitée par deux plaquettes successives de l'ensemble de plaquettes 3 et deux plaquettes successives de l'ensemble de plaquettes 3'.

Les cellules périphériques de la grille-entretoise comportent une paroi externe constituée par une partie de la ceinture périphérique 4 de la grille-entretoise. Les plaquettes des ensembles 3 et 3' comportent des fentes d'assemblage dont la longueur est égale à la moitié de la largeur de la plaquette et qui sont espacées suivant la longueur de la plaquette d'une distance correspondant au côté d'une cellule 2. Les plaquettes sont assemblées entre elles au niveau des parties comportant les fentes, de sorte qu'elles constituent des croisillons comportant quatre dièdres à 90° ayant une arête commune 5 constituant une arête commune à quatre cellules 2 de forme parallélépipédique à base carrée.

Les cellules 2 de la grille sont destinées à recevoir soit un crayon de combustible 6, soit un tube-guide 7.

Les crayons de combustible 6 ont un diamètre sensiblement inférieur au côté d'une cellule, de sorte qu'il subsiste un jeu entre le crayon 6 introduit dans une cellule 2 et les parois de la cellule constituées par des parties des plaquettes 3 et 3'.

De manière à maintenir les crayons de combustible tels que 6 à l'intérieur d'une cellule 2 de la grille, on réalise par découpage et repoussage de deux parois de la cellule 2, deux ensembles de deux butées 9 et 10 disposés sur deux parois adjacentes de la cellule 2.

Sur les parois de la cellule 2 disposées en vis-à-vis des deux parois comportant les butées 9 et 10, sont prévus respectivement deux ressorts 11 et 12. De ce fait, le crayon 6 est maintenu en contact contre les deux ensembles de butées 9 et 10 par les ressorts 11 et 12. Les ressorts 11 et 12 peuvent être réalisés par découpage et repoussage du métal des parois de la cellule 2 ou rapportés sur les parois des cellules et fixés par engagement dans des ouvertures des parois et soudage.

Sur les figures 1 et 2, on a représenté une grille comportant des ressorts réalisés par découpage et repoussage du métal des parois des cellules 2. Dans ce cas, chacune des parois de cellule comporte deux fentes oblongues entre lesquelles est réalisé un ressort tel que 11 ou 12.

La grille 1 telle que représentée sur les figures 1 et 2 peut être par exemple une grille d'extrémité d'un assemblage de combustible en acier martensitique dans laquelle les bossettes et les ressorts sont réalisés à partir du métal des parois de la grille en acier martensitique traité thermiquement.

Les tubes-guides 7 dont le diamètre est sensiblement supérieur au diamètre des crayons de combustible sont introduits pratiquement sans jeu à l'intérieur des cellules 2 de la grille Dans le cas d'une grille d'extrémité inférieure d'un assemblage de combustible en acier martensitique, les tubes 7 sont fixés sur la grille de manière à assurer une rigidification de l'ossature de l'assemblage.

Un autre type de grille-entretoise pour assemblage de combustible est constitué par des plaquettes en un matériau absorbant faiblement les neutrons, par exemple un alliage de zirconium. Dans ce cas, les bossettes sont réalisées par découpage et repoussage des parois en alliage de zirconium des cellules de la grille et les ressorts sont des ressorts en alliage de nickel traité rapportés sur les paroi des cellules.

Dans tous les cas, le soudage des croisillons de la grille est réalisé de la même manière, suivant une séquence de soudage effectuée successivement dans les différents plans bissecteurs des croisillons.

Une méthode particulièrement avantageuse pour souder les croisillons d'une grille-entretoise d'assemblage de combustible met en oeuvre un faisceau laser.

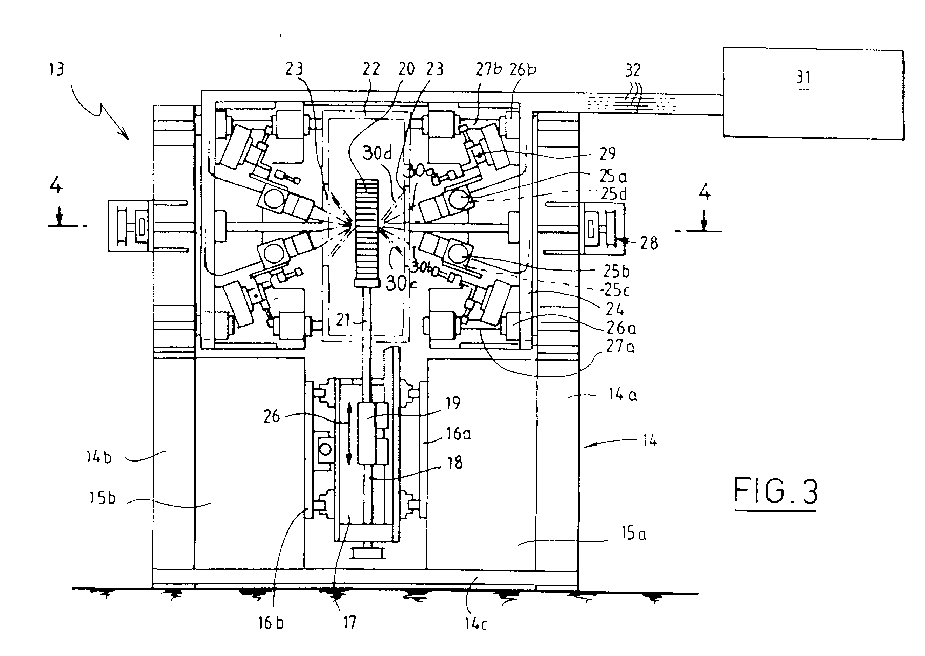

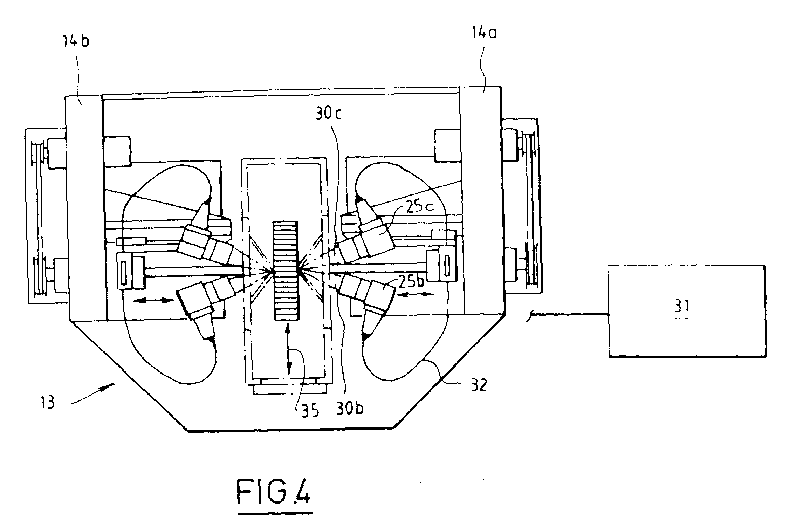

Sur les figures 3 et 4, on a représenté une installation de soudage désigné de manière générale par le repère 13 permettant de mettre en oeuvre le procédé suivant l'invention.

L'installation de soudage 13 comporte un bâti 14 constitué par un support horizontal 14c reposant sur le sol de l'atelier de soudage et deux montants verticaux 14a et 14b. Entre les montants 14a et 14b, sont fixés sur le support horizontal 14c, deux supports verticaux 15a et 15b sur lesquels sont montés deux ensembles de guidage 16a et 16b portant chacun deux ensembles de rails horizontaux constituant les éléments de guidage d'un chariot 17 comportant des glissières ou des galets venant en prise avec les rails pour permettre le guidage du chariot 17 lors de déplacements dans la direction horizontale dans un sens et dans l'autre, comme représenté de manière schématique par la double flèche 35 sur la figure 4.

L'entraînement du chariot peut être assuré par exemple par une vis parallèle aux rails (direction perpendiculaire au plan de la figure 3) en prise avec un écrou solidaire du chariot 17. De plus, un dispositif à vis et écrou 18, 19 permet de déplacer la grille 20 fixée sur un support solidaire de l'extrémité d'une tige verticale 21 traversant de manière étanche et glissante la paroi d'une enceinte étanche 22 dans laquelle on maintient pendant le soudage une atmosphère de gaz inerte.

La grille 20 est fixée sur son support à l'extrémité de la tige 21 dans une position telle que ses deux faces opposées suivant lesquelles sont disposées les extrémités ouvertes des cellules de la grille soient dans des dispositions verticales parallèles à deux faces opposées de l'enceinte 22 traversées par des fenêtres transparentes 23. De cette manière, les deux faces opposées de la grille 20 sont accessibles sur toutes leurs surfaces et la partie interne des cellules est accessible depuis l'extérieur, par les deux faces opposées de la grille disposée verticalement. Pour cela, la grille 20 est disposée sur chant, c'est-à-dire repose sur son support par l'intermédiaire de sa surface latérale constituée par la ceinture entourant la grille.

Les axes des cellules et les arêtes de la grille sont dans une disposition horizontale perpendiculaire aux faces opposées de l'enceinte 22 dans lesquelles sont ménagées les fenêtres optiques 23.

Sur chacun des montants latéraux 14a et 14b du bâti 14 de l'installation de soudage 13 sont montées quatre têtes de soudage par faisceau laser, de manière que les têtes de soudage émettent chacune un faisceau laser de soudage traversant l'une des fenêtres 23 pour converger sur une arête de l'une des cellules de la grille 20 dont on réalise le soudage.

Les deux ensembles de soudage comportant chacun quatre têtes de soudage disposés de part et d'autre des faces opposées de la grille sont identiques ; de ce fait, on ne décrira que l'un des ensembles de quatre têtes de soudage par faisceau laser disposé du côté droit sur les figures 3 et 4 et monté mobile sur le montant latéral droit 14a du bâti 14.

L'ensemble de soudage est fixé sur une plaque support verticale 24 qui est montée mobile dans une direction transversale horizontale perpendiculaire aux faces de la grille, c'est-à-dire une direction parallèle aux axes et aux arêtes des cellules de la grille 20. La plaque support 24 est solidaire de douilles à bille 26a et 26b montées glissantes sur des tiges 27a et 27b de direction transversale. De plus, un ensemble motorisé à vis et écrou 28 permet de déplacer la plaque support 24 dans la direction transversale pour obtenir simultanément une avance des quatre ensembles de soudage par faisceau laser dans la direction des arêtes de la grille, afin de réaliser le soudage suivant une partie de la longueur de chacune des arêtes. Chacune des têtes de soudage par faisceau laser 25a, 25b, 25c et 25d est fixée sur un support 29 dans une position inclinée par rapport aux faces de la grille et par rapport aux arêtes des cellules de la grille et qui peut être réglée avant le démarrage de l'opération de soudage.

Comme il est visible sur les figures 3 et 4, l'inclinaison des supports 29 des diverses têtes de soudage par faisceau laser est réglée de manière que les têtes de soudage telles que 25a, 25b, 25c, 25d représentées sur les figures 3 et 4 émettent des faisceaux laser de soudage respectifs 30a, 30b, 30c, 30d qui sont inclinés par rapport au plan horizontal et par rapport à un plan vertical. Les têtes de soudage sont disposées deux à deux, de manière sensiblement symétrique, par rapport à un plan horizontal et par rapport à un plan vertical, comme il est représenté sur les figures 3 et 4.

Une source laser de puissance 31 permet d'alimenter en rayonnement laser de puissance, par l'intermédiaire d'un faisceau de fibres optiques 32, chacune des têtes de soudage 25a, 25b, 25c, 25d du premier ensemble de soudage disposé du côté droit de la grille ainsi que l'ensemble des têtes de soudage disposées de manière symétrique par rapport aux têtes du premier ensemble sur le côté gauche de la grille 20.

Les têtes de soudage alimentées en un rayonnement laser de puissance émettent des faisceaux laser qui sont dirigés et focalisés chacun sur une partie d'une arête de la grille-entretoise 20, au voisinage de la face de la grille dirigée vers l'ensemble de soudage correspondant.

L'installation de soudage représentée sur les figures 3 et 4 permet donc de réaliser simultanément le soudage de huit portions d'arête de la grille disposées pour quatre d'entre elles au voisinage de l'une des faces de la grille et pour les quatre autres au voisinage de la face opposée de la grille.

En particulier, il est possible d'utiliser l'installation de soudage qui vient d'être décrite pour mettre en oeuvre le procédé de soudage décrit plus haut dans lequel on réalise le soudage de portions d'arête au voisinage des faces de la grille dans des plans bissecteurs des croisillons des cellules avec une disposition alternée des plans bissecteurs le long des rangées de cellules et aux extrémités d'une même arête.

Pour cela, les faisceaux laser tels que 30a, 30b, 30c et 30d produits par les têtes de soudage des deux ensembles de soudage sont dirigés suivant des plans bissecteurs des dièdres des croisillons de la grille. De plus, on réalise une focalisation du faisceau laser sensiblement sur l'arête de la grille suivant laquelle on réalise le soudage par fusion du métal des plaquettes de la grille.

L'avance au cours du soudage suivant la direction des arêtes est obtenue par déplacement contrôlé des supports tels que 24 des deux ensembles de têtes de soudage, dans la direction des arêtes et sur une longueur correspondant à la longueur de la portion d'arête sur laquelle on réalise le soudage.

On peut réaliser simultanément le soudage de huit portions d'arête disposées aux extrémités des quatre arêtes d'une même cellule de la grille ou encore le soudage de huit portions d'arête appartenant à des cellules différentes de la grille, suivant la disposition des supports 29 des différentes têtes de soudage des deux ensembles de soudage.

La disposition symétrique des têtes de soudage par rapport aux faces opposées de la grille et par rapport au réseau de cellules de la grille permet de limiter les déformations par échauffement des plaquettes, lors du soudage.

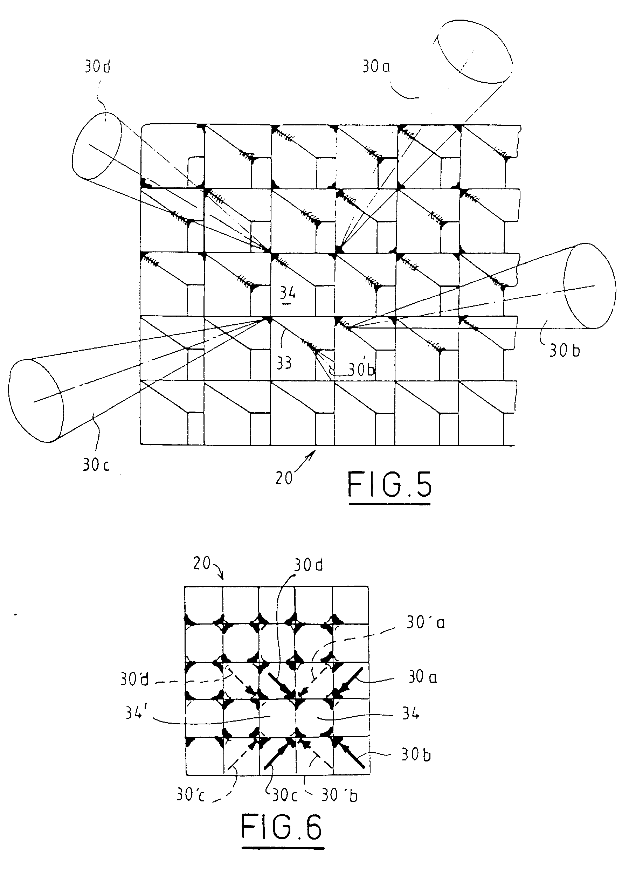

Sur les figures 5 et 6, on a représenté une portion de la grille-entretoise 20, pendant une phase d'une opération de soudage utilisant l'installation représentée sur les figures 3 et 4. Le soudage des plaquettes de la grille le long de portions des arêtes 33 des cellules suivant lesquelles sont assemblées les plaquettes de la grille 20 est réalisé simultanément suivant quatre portions d'arête au voisinage d'une première face de la grille-entretoise et suivant quatre portions d'arête au voisinage de la seconde face de la grille-entretoise 20. Le soudage est réalisé avec des faisceaux laser dirigés sensiblement suivant les plans bissecteurs des dièdres des croisillons formés par les plaquettes.

Comme il est visible sur la figure 5, les quatre faisceaux de soudage laser 30a, 30b, 30c, 30d provenant des quatre têtes de soudage d'un ensemble disposé d'un côté de la grille sont dirigés depuis l'extérieur de la grille vers l'intérieur de quatre cellules entourant une cellule 34 de la grille suivant les arêtes de laquelle on réalise une soudure dans une zone voisine de la face de la grille dirigée vers l'ensemble de soudage émettant les faisceaux 30a, 30b, 30c et 30d. Les faisceaux 30a, 30b, 30c et 30d sont de plus dirigés sensiblement suivant les plans bissecteurs communs à quatre dièdres des cellules entourant la cellule 34 et aux quatre dièdres de la cellule 34. Les quatre têtes de soudage de l'ensemble de soudage sont déplacées simultanément dans la direction des arêtes 33, de manière que les faisceaux laser 30a, 30b, 30c et 30d balaient une portion des arêtes de la cellule 34 entre la face de la grille dirigée vers l'ensemble de soudage et un point situé sur l'arête à l'intérieur de la cellule.

Les faisceaux laser 30a, 30b, 30c et 30d réalisant simultanément le soudage des arêtes 33 de la cellule 34 sont tous dirigés suivant les plans bissecteurs des dièdres opposés aux dièdres de la cellule 34 et ayant une arête en commun avec la cellule 34. Les plans bissecteurs suivant lesquels sont réalisées les soudures des parties d'extrémité d'une arête de la cellule 34 sont disposés à 90° l'un par rapport à l'autre.

Quatre soudures sont réalisées simultanément par le premier ensemble de soudage disposé en vis-à-vis de la première face de la grille-entretoise et par le second ensemble de soudage disposé en vis-à-vis de la seconde face de la grille-entretoise opposée à la face dirigée vers le premier ensemble de soudage.

Sur la figure 6, on a représenté sur une vue en plan d'une des faces de la cellule, sous la forme de flèches en traits pleins, la direction des faisceaux de soudage 30a, 30b, 30c et 30d du premier ensemble de soudage et sous la forme de flèches en pointillés, la direction des faisceaux laser de soudage 30'a, 30'b, 30'c, 30'd du second ensemble de soudage disposé en vis-à-vis de la seconde face de la grille-entretoise.

De manière à mettre en oeuvre le procédé de soudure dans des plans bissecteurs alternés des cellules, l'ensemble des faisceaux 30'a, 30'b, 30'c, 30'd est décalé d'un pas dans la direction d'une rangée de cellules par rapport à l'ensemble de faisceaux 30a, 30b, 30c et 30d du premier ensemble de soudage. Les faisceaux 30'a, 30'b, 30'c et 30'd permettent de souder simultanément quatre tronçons des arêtes de la cellule 34' voisine de la cellule 34, au voisinage de la seconde face de la grille-entretoise.

Il serait possible également de réaliser simultanément le soudage de huit portions d'arête d'une même cellule en utilisant des têtes de soudage des deux ensembles de soudage par faisceaux laser qui sont orientés de manière à émettre des faisceaux laser dans des plans disposés à 90° l'un de l'autre au niveau de chacune des arêtes de la cellule de la grille.

Après avoir effectué une opération de soudage sur huit tronçons d'arêtes des cellules de la grille, on déplace la grille soit horizontalement, soit verticalement, dans la direction d'une rangée de cellules, pour placer un nouvel ensemble de huit tronçons d'arêtes de la grille dans une disposition permettant le soudage le long de ces tronçons par les huit faisceaux laser émis par les deux ensembles de soudage placés de part et d'autre des faces de la grille.

De manière à obtenir une disposition alternée des directions de soudage suivant les plans bissecteurs des dièdres des cellules le long des rangées de cellules, on déplace la grille de deux pas correspondant au côté d'une cellule, entre deux opérations de soudage. On peut ainsi réaliser de manière rapide le soudage de l'ensemble des arêtes de la grille.

De manière à limiter les contraintes et donc les déformations des plaquettes de la grille pendant le soudage, on réalise un déplacement relatif entre la grille et les ensembles de soudage, par pas successifs, suivant une trajectoire ayant globalement la forme d'une spirale partant du centre de la grille.

Le procédé et le dispositif suivant l'invention permettent de réaliser le soudage des arêtes d'une grille-entretoise de manière rapide et totalement automatisable. Ce procédé et ce dispositif permettent de réaliser le soudage avec une disposition des soudures dans les plans bissecteurs des dièdres des cellules parfaitement déterminée.

L'ensemble des soudures des arêtes de la grille peut être réalisé sans avoir à retourner la grille. On peut réaliser le cordon de soudure à un endroit quelconque le long d'une arête de la grille.

L'invention ne se limite pas au mode de réalisation qui a été décrit.

C'est ainsi que les différents dispositifs de soudage de l'installation peuvent être alimentés chacun par une source laser indépendante ou de manière groupée, par l'intermédiaire d'une ou plusieurs sources et de dispositifs multiplexeurs.

Les ensembles de soudage disposés de part et d'autre des faces de la grille-entretoise peuvent être placés de manière qu'on réalise simultanément le soudage de portions d'arêtes appartenant à des cellules identiques ou à des cellules différentes de la grille.

Il est également possible d'utiliser des ensembles de soudage comportant un nombre de têtes de soudage différent de quatre. Toutefois, pour obtenir une rapidité d'exécution suffisante et pour équilibrer les contraintes et déformations subies par la grille, il est nécessaire d'utiliser au moins deux têtes de soudage émettant deux faisceaux laser sur chacun des côtés de la grille.

Les moyens de déplacement de la grille par rapport aux ensembles de soudage peuvent être différents des moyens qui ont été décrits.

Il est également possible de laisser la grille immobile et de déplacer les ensembles de soudage d'une position à une autre, entre deux opérations de soudage.

Il est possible de mettre en oeuvre le procédé suivant l'invention en plaçant la grille-entretoise dans une position différente de la position sur chant qui a été décrite. On peut par exemple prévoir des moyens de support de la grille venant en prise latéralement avec la ceinture de la grille permettant de maintenir la grille dans une position de soudage dans laquelle les faces de la grille ne sont pas dirigées suivant des plans verticaux mais par exemple suivant des plans horizontaux ou inclinés.

L'invention s'applique principalement au soudage de toute grille-entretoise pour assemblage combustible comportant des cellules de forme parallélépipédique constituant un réseau à mailles carrées. Cependant, il serait possible également d'envisager d'utiliser le procédé et le dispositif suivant l'invention pour effectuer le soudage des arêtes d'une grille dont les cellules sont disposées suivant un réseau de forme quelconque.

## Revendications

1. Procédé de soudage de plaquettes métalliques entrecroisées d'une grille-entretoise (20) d'un assemblage de combustible pour un réacteur nucléaire, délimitant des cellules (34, 34') de forme prismatique juxtaposées constituant un réseau dans lequel un ensemble de cellules voisines ont une arête commune suivant laquelle on réalise l'assemblage et le soudage de deux plaquettes constituant un croisillon, les arêtes (33) de la grille (20) étant toutes parallèles entre elles et les cellules (34, 34') ayant des extrémités ouvertes suivant deux faces parallèles opposées de la grille-entretoise, caractérisé par le fait :
- qu'on place et qu'on maintient, pendant le soudage, la grille-entretoise (20) dans une disposition telle que ses deux faces opposées soient entièrement accessibles,
- qu'on effectue simultanément, à l'aide de deux ensembles d'au moins deux dispositifs de soudage au laser (25a, 25b, 25c, 25d) disposés de part et d'autre des faces opposées de la grille-entretoise de manière à diriger chacun un faisceau laser de soudage (30a, 30b, 30c, 30d) sur une arête (33) de la grille (20), par l'extérieur des cellules (34, 34'), le soudage d'au moins quatre tronçons d'arêtes (33) de la grille, et
- qu'on réalise, après une opération de soudage d'au moins quatre tronçons d'arêtes (33) de la grille (20), un déplacement relatif entre la grille-entretoise (20) et les dispositifs de soudage (25a, 25b, 25c, 25d), de manière à diriger les faisceaux laser de soudage (30a, 30b, 30c, 30d) des dispositifs de soudage (25a, 25b, 25c, 25d) vers au moins quatre nouveaux tronçons d'arêtes (33) de la grille (20).

2. Procédé de soudage suivant la revendication 1, caractérisé par le fait qu'on réalise, à l'aide d'un premier ensemble de soudage disposé en vis-à-vis d'une première face de la grille-entretoise (20), le soudage d'au moins deux portions d'arêtes (33) de cellules (34, 34') de la grille (20), au voisinage de la première face de la grille-entretoise (20) et, à l'aide d'un second ensemble de soudage disposé en vis-à-vis de la seconde face de la grille-entretoise (20), le soudage d'au moins deux tronçons d'arêtes (33) de cellules (34, 3') de la grille-entretoise (20) au voisinage de la seconde face de la grille-entretoise.

3. Procédé suivant la revendication 2, dans le cas d'une grille-entretoise comportant des cellules (34, 34') de forme parallélépipédique à section carrée disposées suivant un réseau à mailles carrées, caractérisé par le fait que chacun des deux ensembles de soudage comporte quatre dispositifs de soudage (25a, 25b, 25c, 25d) orientés de manière à émettre un faisceau laser (30a, 30b, 30c, 30d) suivant un plan bissecteur d'un dièdre d'une cellule (34, 34') de la grille.

4. Procédé de soudage suivant la revendication 3, caractérisé par le fait que les faisceaux laser (30a, 30b, 30c, 30d, 30'a, 30'b, 30'c, 30'd) émis par chacun des ensembles de soudage disposés de part et d'autre des faces opposées de la grille-entretoise (20) sont dirigés suivant quatre arêtes (33) d'une même cellule (34) de la grille-entretoise (20) et suivant des plans bissecteurs de quatre dièdres des croisillons comportant les arêtes (33) de la cellule (34) et situés à l'opposé des dièdres de la cellule (34).

5. Procédé suivant la revendication 4, caractérisé par le fait que les deux ensembles de soudage disposés de part et d'autre des faces opposées de la grille-entretoise (20) sont dirigés suivant les arêtes (33) de deux cellules voisines (34, 34') de la grille-entretoise (20).

6. Dispositif de soudage de plaquettes entrecroisées d'une grille-entretoise (20) d'un assemblage de combustible pour un réacteur nucléaire, délimitant des cellules (34, 34') de forme prismatique juxtaposées constituant un réseau dans lequel un ensemble de cellules voisines ont une arête commune suivant laquelle on réalise l'assemblage et le soudage d'au moins deux plaquettes constituant un croisillon, caractérisé par le fait qu'il comporte :
- un support solidaire de l'extrémité d'une tige (21) pour le maintien de la grille-entretoise (20) à l'intérieur d'une enceinte de soudage étanche (22), de manière que deux faces opposées de la grille suivant lesquelles sont disposées des extrémités ouvertes des cellules (34, 34') de la grille-entretoise (20) soient placées de manière à être entièrement accessibles, en vis-à-vis chacune d'une fenêtre optique (23) prévue à travers une paroi de l'enceinte étanche (22),
- des moyens de déplacement (17, 18, 19) de la grille-entretoise (20) dans deux directions parallèles aux plans des faces opposées de la grille (20),
- deux ensembles de soudage par faisceau laser disposés à l'extérieur et de part et d'autre de l'enceinte étanche (22) chacun en vis-à-vis d'une fenêtre optique (23) de traversée d'une paroi de l'enceinte étanche comportant chacun au moins deux têtes de soudage (25a, 25b, 25c, 25d) disposées de manière à diriger un faisceau laser de soudage (30a, 30b, 30c, 30d) à travers une fenêtre optique (23), vers une arête (33) d'une cellule (34, 34') de la grille (20), à travers l'une des faces opposées de la grille (20), et
- des moyens (24, 26a, 26b, 27a, 27b, 28) de déplacement de chacun des ensembles de soudage par faisceau laser dans une direction perpendiculaire aux faces opposées de la grille-entretoise (20) et parallèle aux arêtes (33) des cellules (34, 34') de la grille-entretoise (20).

7. Dispositif suivant la revendication 6, caractérisé par le fait que chacun des ensembles de soudage par faisceau laser comporte quatre têtes de soudage (25a, 25b, 25c, 25d).

8. Dispositif suivant la revendication 7, caractérisé par le fait que chacune des têtes de soudage par faisceau laser (25a, 25b, 25c, 25d) est montée sur un support (29) incliné par rapport aux faces opposées de la grille (20) et par rapport aux arêtes (33) des cellules (34, 34') de la grille-entretoise (20), les quatre supports (29) des quatre têtes de soudage par faisceau laser (25a, 25b, 25c, 25d) étant portés par le moyen (24) de support et de déplacement d'un ensemble de soudage dans une direction perpendiculaire aux faces opposées de la grille (20) et parallèle aux arêtes (33) des cellules (34, 34') de la grille-entretoise (20).

9. Dispositif suivant l'une quelconque des revendications 6 à 8, caractérisé par le fait que les têtes de soudage par faisceau laser (25a, 25b, 25c, 25d) des deux ensembles de soudage sont alimentées en un rayonnement laser de puissance, à partir d'une source laser (31), par l'intermédiaire de fibres optique (32).

10. Dispositif suivant l'une quelconque des revendications 6 à 9, caractérisé par le fait qu'il comporte un bâti (14) comprenant deux montants latéraux verticaux (14a, 14b) sur chacun desquels est monté un moyen de support et de déplacement (24) d'un ensemble de soudage par faisceau laser, le dispositif de support (21) de la grille-entretoise (20) comportant des moyens de maintien de la grille-entretoise (20) à l'intérieur de l'enceinte étanche (22) dans une disposition telle que les deux faces parallèles opposées de la grille-entretoise soient placées verticalement.

## Patentansprüche

1. Verfahren zum Verschweißen von sich kreuzenden Metallstegen eines Abstandshaltergitters (20) eines Brennstabbündeis für einen Kernreaktor, das nebeneinanderliegende prismenförmige Zellen (34, 34') bildet, die ein Netz bilden, bei dem eine Gruppe benachbarter Zellen eine gemeinsame Kante haben, an der zwei ein Armkreuz bildende Stege zusammengefügt und verschweißt werden, wobei die Kanten (33) des Gitters (20) alle zueinander parallel sind und die Zellen (34, 34') offene Enden in zwei parallelen, entgegengesetzten Stirnflächen des Abstandshaltergitters haben, dadurch **gekennzeichnet,** daß:
- man das Abstandehaltergitter (20) in einer Konfiguration anordnet und während der Schweißung hält, in der seine beiden entgegengesetzten Stirnflächen vollstandig zugänglich sind,
- man mit Hilfe von zwei Gruppen von wenigstens zwei Laser-Schweißeinrichtungen (25a, 25b, 25c, 25d), die derart beiderseits der entgegengesetzen Stirnflächen des Abstandshaltergitters angeordnet sind, daß Jede von außerhalb der Zellen (34, 34') einen Laser-Schweißstrahl (30a, 30b, 30c, 30d) auf eine Kante (33) des Gitters (20) richtet, wenigstens vier Kantenabschnitte (33) des Gitters gleichzeitig verschweißt und
- man nach dem Schweißen von wenigstens vier Kantenabschnitten (33) des Gitters (20) eine Relativbewegung zwischen dem Abstandshaltergitter (20) und den Schweißeinrichtungen (25a, 25b, 25c, 25d) derart bewirkt, daß die Laser-Schweißstrahlen (30a. 30b, 30c, 30d) der Schweißeinrichtungen (25a, 25b, 25c, 25d) auf wenigstens vier neue Kantenabschnitte (33) des Gitters (20) gerichtet werden.

2. Verfahren nach Anspruch 1, dadurch gekennzeichnet, daß man mit Hilfe einer ersten Schweißgruppe, die gegenüberliegend zu einer ersten Stirnfläche des Abstandshaltergitters (20) angeordnet ist, wenigstens zwei Teile von Kanten (33) von Zellen (34, 34') des Gitters (20) in der Nähe der ersten Stirnfläche des Abstandshaltergitters (20) verschweißt und mit Hilfe einer zweiten Schweißgruppe, die gegenüberliegend zu der zwelten Stirnfläche des Abstandshaltergitters (20) angeordnet ist, wenigstens zwei Kantenabschnitte (33) von Zellen (34, 3') des Abstandshaltergitters (20) in der Nähe der zweiten Stirnfläche des Abstandshaltergitters verschweißt.

3. Verfahren nach Anspruch 2. für den Fall, daß ein Abstandshaltergitter quaderförmige Zellen (34, 34') mit rechteckigem Querschnitt aufweist, die in einem Netz mit rechteckigen Maschen angeordnet sind, dadurch gekennzeichnet, daß jede der beiden Schweißgruppen vier Schweißeinrichtungen (25a, 25b, 25c, 25d) aufweist, die so gerichtet sind, daß sie einen Laserstrahl (30a, 30b, 30c, 30d) in einer Diagonalebene einer Zelle (34, 34') des Gitters emittieren.

4. Verfahren nach Anspruch 3, dadurch gekennzeichnet, daß die Laserstrahlen (30a, 30b, 30c, 30c, 30d, 30'a, 30'b, 30'c, 30'd), die von jeder der beiderseits der entgegengesetzten Stirnflächen des Abstandshaltergitters (20) angeordneten Schweißgruppen emittiert werden, auf vier Kanten (33) derselben Zelle (34) des Abstandshaltergitters (20) gerichtet sind, und zwar in den Ebenen der Winkelhalbierenden von vier Innenecken von die Kanten (33) der Zelle (34) enthaltenden Armkreuzen und gegenüberliegend zu den Innenecken der Zelle (34).

5. Verfahren nach Anspruch 4, dadurch gekennzeichnet, daß die beiden beiderseits der entgegengesetzten Stirnflächen des Abstandshaltergitters (20) angeordneten Schweißgruppen auf die Kanten (33) von zwei benachbarten Zellen (34, 34') des Abstandshaltergitters (20) gerichtet sind.

6. Schweißvorrichtung für slch kreuzende Stege eines Abstandshaltergitters (20) eines Brennstabbündels für einen Kernreaktor, das nebeneinanderliegende prismenförmige Zellen (34, 34') begrenzt, die ein Netz bilden, in dem eine Gruppe benachbarter Zellen eine gemeinsame Kante haben, an der wenigstens zwei ein Armkreuz bildende Stege zusammengefügt und verschweißt werden, dadurch gekennzeichnet, daß sie aufweist:
- einen mit dem Ende einer Stange (21) verbundenen Träger zum Halten des Abstandshaltergitters (20) im Inneren einer dichten Schweißkammer (22), derart, daß zwei entgegengesetzte Stirnflächen des Gitters, in denen die offenen Enden der Zellen (34, 34') des Abstandshaltergitters (20) liegen, so angeordnet sind, daß sie vollständig zugänglich sind, Jeweils gegenüberliegend zu einem in einer Wand der dlchten Schweißkammer (22) ausgebildeten optischen Fenster (23)
- Mittel (17, 18, 19) zum Verschieben des Abstandshaltergitters (20) in zwei Richtungen parallel zu den Ebenen der entgegengesetzten Stirnflächen des Gitters (20),
- zwei Laserstrahl-Schweißgruppen, die außerhalb und beiderseits der dichten Schweißkammer (22) Jeweils gegenüberliegend zu einem optischen Fenster (23) in einer Wand der dichten Schweißkammer angeordnet sind und jeweils wenigstens zwei Schweißköpfe (25a, 25b, 25c, 25d) aufweisen, die so angeordnet sind, daß sie einen Laser-Schweißstrahl (30a, 30b, 30c, 30d) durch ein optisches Fenster (23) und durch eine der entgegengesetzten Stirnflächen des Gitters (20) auf eine Kante (33) einer Zelle (34, 34') des Gitters (20) richten, und
- Mittel (24. 26a, 26b, 27a, 27b, 28) zum Verschieben jeder der Laserstrahl-Schweißgruppen in einer Richtung rechtwinklig zu den entgegengesetzten Stirnflächen des Abstandshaltergitters (20) und parallel zu den Kanten (33) der Zellen (34, 34') des Abstandshaltergitters (20).

7. Vorrichtung nach Anspruch 6, dadurch gekennzeichnet, daß jede der Laserstrahl-Schweißgruppen vier Schweißköpfe (25a, 25b, 25c, 25d) aufweist.

8. Vorrichtung nach Anspruch 7, dadurch gekennzeichnet, daß Jeder der Laserstrahl-Schweißköpfe (25a, 25b, 25c, 25d) an einem Träger (29) montiert ist, der in bezug auf die entgegengesetzten Stirnflächen des Gitters (20) und in bezug auf die Kanten (33) der Zellen (34, 34') des Abstandshaltergitters (20) geneigt ist, wobei die vier Träger (29) der vler Laserstrahl-Schweißköpfe (25a, 25b, 25c, 25d) durch die Einrichtung (24) zum Halten und Verschieben einer Schweißgruppe in einer Richtung senkrecht zu den entgegengesetzten Stirnflächen des Gitters (20) und parallel zu den Kanten (33) der Zellen (34, 34') des Abstandshaltergitters (20) gehalten sind.

9. Vorrichtung nach einem der Ansprüche 6 bis 8, dadurch gekennzeichnet, daß die Laserstrahl-Schweißköpfe (25a, 25b, 25c, 25d) der beiden Schweißgruppen von einer Laseratrahlquelle (31) über Optische Fasern (32) mit Leistungs-Laserstrahlung versorgt werden.

10. Vorrichtung nach einem der Ansprüche 6 bis 9, dadurch gekennzeichnet, daß sie ein Gestell (14) mit zwei seitlichen vertikalen Ständern (14a, 14b) aufweist, an denen Jeweils eine Halte- und Verschiebeeinrichtung (24) für eine Laserstrahl-Schweißgruppe angeordnet ist, wobei die Trageinrichtung (21) für das Abstandshaltergitter (20) Mittel zum Halten des Abstandshaltergitters (20) im Inneren der dichten Kammer (22) in einer solchen Anordnung aufweist, daß die beiden entgegengesetzten parallelen Stirnflächen des Abstandshaltergitters vertikal orientiert sind.

## Claims

1. Process for welding interlaced metal plates of a spacer grid (20) of a fuel assembly for a nuclear reactor, defining juxtaposed prismatic cells (34, 34') forming a network in which a set of neighbouring cells have a common edge along which the assembling and welding of two plates forming an intersection are carried out, the edges (33) of the grid (20) all being parallel to one another and the cells (34, 34') having open ends along two opposite parallel surfaces of the spacer grid, characterised in that
- during the welding the spacer grid (20) is positioned and held in an arrangement such that its two opposite sides are fully accessible,
- using two sets of at least two laser welding devices (25a, 25b, 25c, 25d) arranged on either side of the opposite sides of the spacer grid so that they each direct a welding laser beam (30a, 30b, 30c, 30d) onto an edge (33) of the grid (20), via the outside of the cells (34, 34'), at least four sections of edges (33) of the grid are welded simultaneously, and
- after the welding of at least four sections of edges (33) of the grid (20), relative displacement is carried out between the spacer grid (20) and the welding devices (25a, 25b, 25c, 25d), so as to direct the welding laser beams (30a, 30b, 30c, 30d) of the welding devices (25a, 25b, 25c, 25d) towards at least four new sections of edges (33) of the grid (20).

2. Welding process according to claim 1, characterised in that, using a first welding assembly arranged facing a first side of the spacer grid (20), at least two sections of edges (33) of cells (34, 34') of the grid (20) are welded, in the vicinity of the first side of the spacer grid (20) and, using a second welding assembly arranged facing the second side of the spacer grid (20), at least two sections of edges (33) of cells (34, 34') of the spacer grid (20) are welded, in the vicinity of the second side of the spacer grid.

3. Process according to claim 2, in the case of a spacer grid having parallelepipedic cells (34, 34') of square cross section arranged in a square mesh network, characterised in that each of the two welding assemblies comprises four welding devices (25a, 25b, 25c, 25d) oriented so as to emit a laser beam (30a, 30b, 30c, 30d) in a plane which bisects a dihedron of a cell (34, 34') of the grid.

4. Welding process according to claim 3, characterised in that the laser beams (30a, 30b, 30c, 30d, 30'a, 30'b, 30'c, 30'd) emitted by each of the welding assemblies arranged on either side of the opposite sides of the spacer grid (20) are directed along four edges (33) of the same cell (34) in the spacer grid (20) and along planes bisecting four dihedrons of the intersections comprising the edges (33) of the cell (34) and located opposite the dihedrons of the cell (34).

5. Process according to claim 4, characterised in that the two welding assemblies arranged on either side of the opposite sides of the spacer grid (20) are directed along the edges (33) of two adjacent cells (34, 34') of the spacer grid (20).

6. Apparatus for welding the interlaced plates of a spacer grid (20) of a fuel assembly for a nuclear reactor, defining juxtaposed prismatic cells (34, 34') forming a network in which a set of neighbouring cells have a common edge along which the assembling and welding of two plates forming an intersection are carried out, characterised in that it comprises:
- a support fixed to the end of a rod (21) for holding the spacer grid (20) inside a sealed welding chamber (22), so that two opposite sides of the grid along which the open ends of the cells (34, 34') of the spacer grid (20) are arranged, are placed so as to be fully accessible, each opposite an optical window (23) provided in a wall of the sealed chamber (22),
- means (17, 18, 19) for displacing the spacer grid (20) in two directions parallel to the planes of the opposite sides of the grid (20),
- two laser beam welding assemblies arranged outside and on either side of the sealed chamber (22), each being opposite an optical window (23) provided in a wall of the sealed chamber and each comprising at least two welding heads (25a, 25b, 25c, 25d) arranged so as to direct a welding laser beam (30a, 30b, 30c, 30d) through an optical window (23) towards an edge (33) of a cell (34, 34') of the grid (20), through one of the opposite sides of the grid (20), and
- means (24, 26a, 25b, 27a, 27b, 28) for moving each of the laser beam welding assemblies in a direction perpendicular to the opposite sides of the spacer grid (20) and parallel to the edges (33) of the cells (34, 34') of the spacer grid (20).

7. Apparatus according to claim 6, characterised in that each of the laser beam welding assemblies comprises four welding heads (25a, 25b, 25c, 25d).

8. Apparatus according to claim 7, characterised in that each of the laser beam welding heads (25a, 25b, 25c, 25d) is mounted on a support (29) which is inclined relative to the opposite sides of the grid (20) and relative to the edges (33) of the cells (34, 34') of the spacer grid (20), the four supports (29) of the four laser beam welding heads (25a, 25b, 25c, 25d) being carried by the means (24) for supporting and displacing a welding assembly in a direction perpendicular to the opposite sides of the grid (20) and parallel to the edges (33) of the cells (34, 34') of the spacer grid (20).

9. Apparatus according to any one of claims 6 to 8, characterised in that the laser beam welding heads (25a, 25b, 25c, 25d) of the two welding assemblies are supplied with powerful laser radiation, from a laser source (31), through optical fibres (32).

10. Apparatus according to any one of claims 6 to 9, characterised in that it comprises a structure (14) having two vertical side uprights (14a, 14b) on each of which are mounted means (24) for supporting and displacing a laser beam welding assembly, the support means (21) for the spacer grid (20) comprising means for holding the spacer grid (20) inside the sealed chamber (22) in an arrangement such that the two opposite parallel sides of the spacer grid are positioned vertically.
